# EUROPÄISCHE PATENTSCHRIFT

(11) **EP 1 363 975 B1**
(45) Veröffentlichungstag und Bekanntmachung des Hinweises auf die Patenterteilung: **30.03.2005**
(21) Anmeldenummer: 02722096.1
(22) Anmeldetag: 19.02.2002
(51) Int. Cl.: C09B 41/00, B01J 4/02, G01N 27/416, G01N 27/38

(54) **VERFAHREN UND VORRICHTUNG ZUR KONTINUIERLICHEN RODOX-REGELUNG BEI AZOKUPPLUNGEN**
METHOD AND DEVICE FOR CONTINUOUS REDOX ADJUSTMENT IN AZOIC COUPLINGS
PROCEDE ET DISPOSITIF DE REGULATION CONTINUE D'OXYDOREDUCTION DANS DES COPULATIONS AZOIQUES

(30) Priorität: 23.02.2001 DE 10108716
(43) Veröffentlichungstag der Anmeldung: 26.11.2003
(73) Patentinhaber: Clarant GmbH, 65929 Frankfurt am Main (DE)
(72) Erfinder: SAITMACHER, Klauss, 65830 Kriftel (DE); GABSKI, Hans-Peter, 64665 Alsbach Hähnlein (DE); HEIDER, Harald, 65779 Kelkheim (DE); PATZLAFF, Jürgen, 64380 Rossdorf (DE); WILLE, Christian, 69469 Weinheim (DE); JUNG, Jörg, 65439 (DE)
(74) Vertreter: Hütter, Klaus, Dr.
(86) Internationale Anmeldenummer: PCT/EP2002/001718
(87) Internationale Veröffentlichungsnummer: WO 2002/068540

(56) Entgegenhaltungen:
- WO-A-01/59013
- DE-A- 2 352 735
- DE-B- 1 085 278
- CHEMICAL ABSTRACTS, vol. 100, no. 22, 1984 Columbus, Ohio, US; abstract no. 176459d, VANA, JAROSLAV ET AL: "Amperometrictracing of coupling during production of azo dyes" Seite 84; XP002208437 & CS 208 965 A 1. Februar 1984 (1984-02-01)

## Beschreibung

Die vorliegende Erfindung betrifft ein Verfahren zur Online-Steuerung einer kontinuierlichen Azokupplungsreaktion sowie eine geeignete Messzelle und Vorrichtung zur Durchführung dieses Verfahrens.

Bei der Herstellung von Azofarbmitteln in kontinuierlich betriebenen Reaktoren müssen die Kupplungskomponente und die Diazokomponente entsprechend der Reaktionsstöchiometrie im strömenden Reaktionsgemisch so dosiert werden, dass bei maximaler Ausbeute eine möglichst gleichbleibende hohe Produktqualität erreicht wird.

Durchlaufgefäße zur Messung des Redoxpotentials wie sie in diskontinuierlich betriebenen Reaktoren zur Herstellung von Azofarbstoffen verwendet werden (DE-A-2 352 735) können nicht verwendet werden. Der Grund hierfür ist das bauartbedingte große Messvolumen und die damit verbundene lange Totzeit bei der Erfassung von Änderungen des Redoxpotentials.

Eine Online-Regelung von Eduktströmen in kontinuierlich betriebenen Reaktoren zur Durchführung von Azokupplungsreaktionen ist bislang noch nicht bekannt.

Es bestand daher die Aufgabe, ein empfindliches Regelverfahren zur kontinuierlichen Azokupplung, vorzugsweise in Mikroreaktoren, bereitzustellen, das Azofarbmittel in hoher Ausbeute und gleichbleibend guter Produktqualität liefert. Eine weitere Aufgabe bestand in der Bereitstellung einer geeigneten Vorrichtung und Messzelle zur Durchführung des besagten Verfahrens.

Diese Aufgabe wurde durch eine dem kontinuierlichen Reaktor nachgeschaltete neuartige Durchflussmesszelle und Online-Regelung der Eduktströme mit Hilfe von Redoxpotential-Messungen in der Durchflussmesszelle gelöst.

Gegenstand der Erfindung ist daher ein Verfahren zum Regeln der Dosierung der Reaktionskomponenten bei einer kontinuierlichen Azokupplungsreaktion, dadurch gekennzeichnet, dass das Redoxpotential des Reaktionsgemisches im Hauptstrom nach dessen Austritt aus einem kontinuierlich betriebenen Reaktor in einer Durchflussmesszelle mit Hilfe einer quer zur Fließrichtung des Reaktionsgemisches angeordneten rotierenden Redoxelektrode online gemessen wird, wobei eine Reinigung der Elektrode durch Kontakt mit einem stabförmigen Körper erfolgt.

Beim erfindungsgemäßen Verfahren kann die Dosierung der Kupplungskomponente, der Diazokomponente oder beider Komponenten online geregelt werden, beispielsweise ein Eduktstrom A, enthaltend eine Lösung oder Suspension der Kupplungskomponente, ein Eduktstrom B, enthaltend eine Lösung oder Suspension der Diazokomponente, und gegebenenfalls ein Volumenstrom C, enthaltend eine Pufferlösung, eine Säure oder eine Lauge zur Einstellung eines bestimmten pH-Wertes.

Zweckmäßigerweise erfolgt die Dosierung der Reaktionskomponenten durch Vergleich des Messsignals der Redoxelektrode mit dem Sollwert eines vorher eingestellten Redoxpotentials bei konstantem pH-Wert. Es ist daher zweckmäßig, neben einem Redox-Regelkreis, der die Messzelle mit den Eduktströmen A und B verbindet, einen zweiten Regelkreis, der eine pH-Elektrode in der Durchflussmesszelle mit dem Volumenstrom C verbindet, zur Konstanthaltung des pH-Wertes einzurichten.

In der Praxis wird normalerweise so verfahren, dass in Abhängigkeit von der Art und Konzentration der Kupplungskomponente und der Diazokomponente, d.h. in Abhängigkeit vom herzustellenden Azofarbmittel, das erforderliche Redoxpotential ermittelt wird. Zu diesem Zweck wird im Produktstrom oder in einem Auffanggefäß nach Einhaltung einer bestimmten, von der Art des herzustellenden Azofarbmittels abhängigen Reaktionszeit durch geeignete analytische Verfahren (z.B. Tüpfeltest, HPLC) auf eventuellen Überschuss einer Komponente geprüft. Abhängig von diesem Ergebnis werden die Eduktströme A und/oder B korrigiert. Wenn kein Überschuss eines der Edukte mehr festgestellt werden kann, wird das Redoxpotential festgelegt. Für den weiteren Verlauf der Azokupplungsreaktion wird jede Abweichung von diesem festgelegten Redoxpotential durch entsprechende Änderung der Eduktströme A und/oder B korrigiert. Für die Konstanthaltung des pH-Wertes wird der Volumenstrom C für den Laugen-, Säuren- oder Pufferlösungszufluss in einem eigenen Regelkreis gesteuert.

Die Azokupplungsreaktion kann erfindungsgemäß für die Herstellung von Azopigmenten und von Azofarbstoffen durchgeführt werden.

Von besonderem Interesse für Azopigmente sind die Diazoniumsalze folgender Aminkomponenten:
4-Methyl-2-nitro-phenylamin, 4-Chloro-2-nitro-phenylamin, 3,3'-Dichloro-biphenyl-4,4'-diamin, 3,3'-Dimethyl-biphenyl-4,4'-diamin, 4-Methoxy-2-nitro-phenylamin, 2-Methoxy-4-nitro-phenylamin, 4-Amino-2,5-dimethoxy-N-phenylbenzensulfonamid, 5-Amino-isophthalsäuredimethylester, Anthranilsäure, 2-Trifluoromethyl-phenylamin, 2-Amino-terephthalsäuredimethylester, 1,2-Bis-(2-Amino-phenoxy)-ethan, 2-Amino-terephthalsäuredi-isopropylester, 2-Amino-4-chloro-5-methyl-benzensulfonsäure, 2-Methoxyphenylamin, 4-(4-Aminobenzoylamino)-benzamid, 2,4-Dinitro-phenylamin, 3-Amino-4-methyl-benzamid, 3-Amino-4-chloro-benzamid, 3-Amino-4-chlor-benzoesäure, 4-Nitrophenylamin, 2,5-Dichloro-phenylamin, 4-Methyl-2-nitro-phenylamin, 2-Chloro-4-nitro-phenylamin, 2-Methyl-5-nitro-phenylamin, 2-Methyl-4-nitro-phenylamin, 2-Methyl-5-nitro-phenylamin, 2-Amino-4-chloro-5-methyl-benzensulfonsäure, 2-Aminonaphthalin-1-sulfonsäure, 2-Amino-5-chloro-4-methyl-benzolsulfonsäure, 2-Amino-5-chloro-4-methyl-benzensulfonsäure, 2-Amino-5-methyl-benzolsulfonsäure, 2,4,5-Trichloro-phenylamin, 3-Amino-4-methoxy-N-phenyl-benzamid, 4-Aminobenzamid, 2-Amino-benzoesäure-methylester, 4-Amino-5-methoxy-2,N-dimethylbenzensulfonamid, 2-Amino-N-(2,5-dichloro-phenyl)-terephthalsäuremonomethyl ester, 2-Amino-benzoesäurebutylester, 2-Chloro-5-trifluoromethyl-phenylamin, 4-(3-Amino-4-methyl-benzoylamino)-benzensulfonsäure, 4-Amino-2,5-dichloro-N-methyl-benzensulfonamid, 4-Amino-2,5-dichloro-N,N-dimethyl-benzensulfonamid, 6-Amino-1H-chinazolin-2,4-dion, 4-(3-Amino-4-methoxy-benzoylamino)-benzamid, 4-Amino-2,5-dimethoxy-N-methyl-benzensulfonamid, 5-Aminobenzimidazalon, 6-Amino-7-methoxy-1,4-dihydro-chinoxalin-2,3-dion, 3-Amino-4-methylbenzoesäure-(2-chlorethylester), 3-Amino-4-chlor-benzoesäure-isopropylester, 3-Amino-4-chlor-benzotrifluorid, 3-Amino-4-methyl-benzoesäure-n-propylester, 2-Amino-naphthalin-3,6,8-trisulfonsäure, 2-Amino-naphthalin-4,6,8-trisulfonsäure, 2-Amino-naphthalin-4,8-disulfonsäure, 2-Amino-naphthalin-6,8-disulfonsäure, 2-Amino-8-hydroxy-naphthalin-6-sulfonsäure, 1-Amino-8-hydroxy-naphthalin-3,6-disulfonsäure, 1-Amino-2-hydroxy-benzol-5-sulfonsäure, 1-Amino-4-acetylaminobenzol-2-sulfonsäure, 2-Aminoanisol, 2-Aminomethoxybenzol-ω-methansulfonsäure, 2-Aminophenol-4-sulfonsäure, o-Anisidin-5-sulfonsäure, [2-(3-Amino-1,4-dimethoxy-benzensulfonyl)ethyl]-schwefelsäureester und [2-(1-Methyl-3-amino-4-methoxy-benzensulfonyl)ethyl]-schwefelsäureester.

Von besonderem Interesse für Azofarbstoffe sind die Diazoniumsalze folgender Aminkomponenten:
[2-(4-Amino-benzensulfonyl)-ethyl]schwefelsäureester, [2-(4-Amino-5-methoxy-2-methyl-benzensulfonyl)-ethyl] schwefelsäureester, [2-(4-Amino-2,5-dimethoxybenzensulfonyl)-ethyl] schwefelsäureester, {2-[4-(5-Hydroxy-3-methyl-pyrazol-1-yl)-benzensulfonyl]-ethyl}schwefelsäureester, [2-(3-Amino-4-methoxybenzensulfonyl)-ethyl]schwefelsäureester, [2-(3-Amino-benzensulfonyl)-ethyl]schwefelsäureester.

Von besonderem Interesse für Azopigmente sind folgende Kupplungskomponenten:
Acetessigsäurearylide 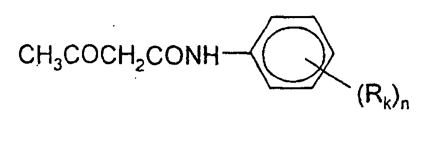 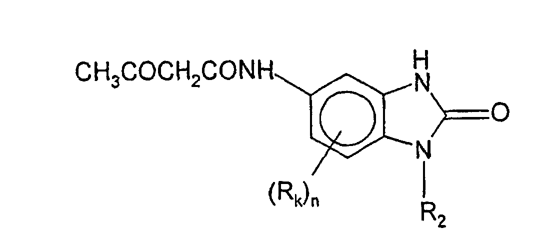 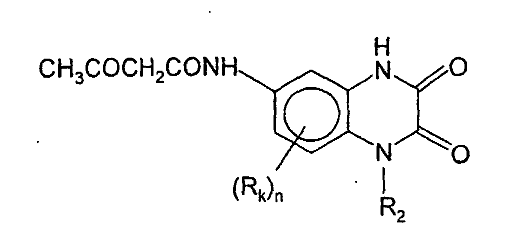 2-Hydroxynaphthaline 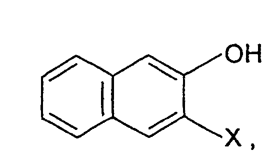 mit X = H, COOH, 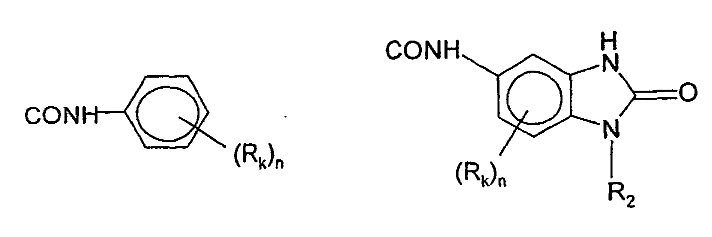 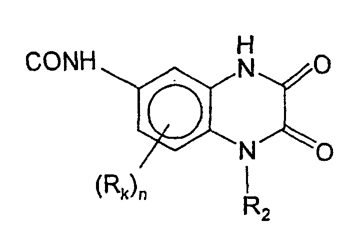 und Rₖ = CH₃, OCH₃, OC₂H₅, NO₂, Cl, NHCOCH₃ und n = 0 bis 3; sowie R₂ = H, CH₃ und C₂H₅, bisacetoacetylierte Diaminobenzole und -biphenyle, N,N'-Bis(3-hydroxy-2-naphthoyl)-phenylendiamine (jeweils ggfs. substituiert), sowie Pyrazolone 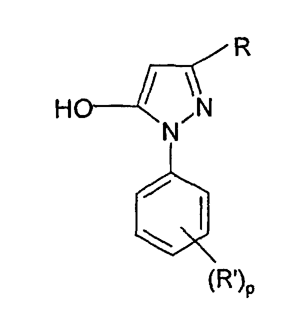 mit
R = CH₃, COOCH₃, COOC₂H₅,
R' = CH_{3,} SO₃H, Cl;
p = 0 bis 3.
Von besonderem Interesse für Azofarbstoffe sind folgende Kupplungskomponenten:
4-[5-Hydroxy-3-methyl-pyrazol-1-yl]-benzensulfonsäure, 2-Amino-naphthalin-1,5-disulfonsäure, 5-Methoxy-2-methyl-4[3-oxo-butyrylamino]-benzensulfonsäure, 2-Methoxy-5-methyl-4-[3-oxo-butyrylamino]-benzensulfonsäure, 4-Acetylamino-2-amino-benzensulfonsäure, 4-[4-Chloro-6-(3-sulfo-phenylamino)-[1,3,5]-triazin-2-ylamino]-5-hydroxy-naphthalin-2,7-disulfonsäure, 4-Acetylamino-5-hydroxynaphthalin-2,7-disulfonsäure, 4-Amino-5-hydroxy-naphthalin-2,7-disulfonsäure, 5-Hydroxy-1-[4-sulfophenyl]-1H-pyrazol-3-carbonsäure, 2-Amino-naphthalin-6,8-disulfonsäure, 2-Amino-8-hydroxy-naphthalin-6-sulfonsäure, 1-Amino-8-hydroxynaphthalin-3,6-disulfonsäure, 2-Aminoanisol, 2-Aminomethoxybenzol-ω-methansulfonsäure und 1,3,5-Trishydroxybenzol.

Die Azokupplung erfolgt vorzugsweise in wässriger Lösung, es können aber auch organische Lösungsmittel, gegebenenfalls im Gemisch mit Wasser verwendet werden, beispielsweise aromatische Kohlenwasserstoffe, Chlorkohlenwasserstoffe, Glykolether, Nitrile, Ester, Dimethylformamid, Tetramethylharnstoff und N-Methylpyrrolidon.

Zur erfindungsgemäßen Durchführung der Azokupplungsreaktion wird eine Lösung oder Suspension des Diazoniumsalzes (Eduktstrom B) und eine Lösung oder Suspension der Kupplungskomponente (Eduktstrom A) kontinuierlich in den Reaktor eingeleitet, dort miteinander kontinuierlich vermischt und zur Reaktion gebracht.

Die Herstellung von Mischungen von Einsatzstoffen zu Volumenströmen kann auch vorher in Mikromischern oder in vorgeschalteten Vermischungszonen stattfinden.
Für die Azokupplung können den Eduktströmen Pufferlösungen (Volumenstrom C) zugeführt werden, vorzugsweise von organischen Säuren und deren Salzen, z.B. Essigsäure/Acetat-Puffer, Zitronensäure/Citrat-Puffer, oder von anorganischen Säuren und deren Salzen, wie z.B. Phosphorsäure/Phosphat oder Kohlensäure/Carbonat.

Azopigmente können Monoazo- oder Disazo-Pigmente sein. Es können auch Gemische von Azopigmenten hergestellt werden.

Als Azopigmente kommen insbesondere C.I. Pigment Yellow 1, 3, 12, 13, 14, 16, 17, 65, 73, 74, 75, 81, 83, 97, 111, 120, 126, 127, 151, 154, 155, 174, 175, 176, 180, 181, 183, 191, 194, 198; Pigment Orange 5, 34, 36, 38, 62, 72, 74; Pigment Red 2, 3, 4, 8, 12, 14, 22, 48:1-4, 49:1, 52:1-2, 53:1-3, 57:1, 60:1, 112, 137, 144, 146, 147, 170, 171, 175, 176, 184, 185, 187, 188, 208, 214, 242, 247, 253, 256, 266; Pigment Violet 32; Pigment Brown 25 in Betracht.

Bei den Farbstoffen kommen Dispersions- und auch wasserlösliche anionische und kationische Farbstoffe in Betracht. Insbesondere handelt es sich um Mono-, Dis- oder Polyazofarbstoffe sowie Formazan- oder Anthrachinonfarbstoffe. Bei den wasserlöslichen Farbstoffen handelt es sich insbesondere um die Alkalisalze oder Ammoniumsalze der Reaktivfarbstoffe sowie der sauren Wollfarbstoffe oder substantiven Baumwollfarbstoffe der Azoreihe. Als Azofarbstoffe kommen vorzugsweise metallfreie und metallisierbare Monoazo-, Disazo- und Trisazofarbstoffe, die eine oder mehrere Sulfonsäure- oder Carbonsäuregruppen enthalten, schwermetallhaltige, namentlich kupfer-, chrom- oder kobalthaltige Monoazo-, Disazo- und Trisazofarbstoffe in Betracht. Die Herstellung der Vorstufen für die metallhaltigen Farbstoffe kann nach üblichen Verfahren in einem konventionellen Batchverfahren durchgeführt werden.

Als reaktive Azofarbstoffe kommen insbesondere C.I. Reactive Yellow 15, 17, 37, 57, 160; Reactive Orange 107; Reactive Red 2, 23, 35, 180; Reactive Violet 5; Reactive Blue 19, 28, 203, 220; und Reactive Black 5, 8, 31; in Betracht. Des weiteren sind insbesondere C.I. Acid Yellow 17, 23; Direct Yellow 17, 86, 98, 132, 157; und Direct Black 62, 168 und 171 nach diesem Verfahren darstellbar.

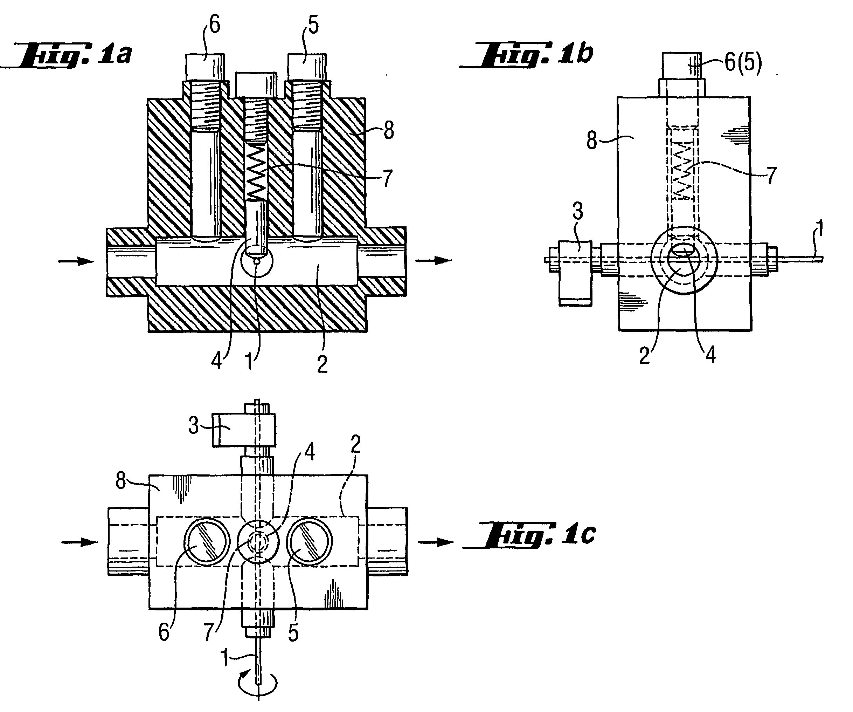

Zur Durchführung des Verfahrens hat sich eine Durchflussmesszelle (Fig. 1a, 1b, 1c) bewährt, die durch eine rotierende Redoxelektrode (1), die etwa in der Mitte des Strömungsrohres (2) der Durchflussmesszelle quer zur Strömungsrichtung des Reaktionsgemisches angeordnet und in einem Schleifkontakt (3) zur Signalabnahme drehbar gelagert ist; einen die rotierende Redoxelektrode berührenden stabförmigen Körper (4) mit reinigender Wirkung; eine Referenzelektrode (5); und eine pH-Elektrode (6) gekennzeichnet ist.

Die rotierende Redoxelektrode (1) besteht aus einem leitenden Material, vorzugsweise aus W, Au, Pt, Ag, Sb, Mo, Cr oder einer Legierung davon, Graphit oder aus mindestens 80% eines der angeführten Materialien. Besonders bevorzugt sind Redoxelektroden aus Wolfram.
Die Redoxelektrode ist drehbar gelagert, z.B. in einer Cu-Buchse, und wird durch eine externe Antriebsvorrichtung, beispielsweise durch einen Elektromotor, in Rotation um ihre Längsachse versetzt. Die Signalabnahme erfolgt über einen Schleifkontakt in der Lagerstelle. Als Gegenelektrode dient die Referenzelektrode (5), die bevorzugt eine handelsübliche Ag/AgCl-Elektrode, Kalomelelektrode oder Pt/H₂ -Normalwasserstoffelektrode ist.
Die Redoxelektrode (1) wird während ihrer Rotation von einem stabförmigen Körper (4) berührt, bestehend aus oder beschichtet mit einem inerten Material, z.B. Polyvinylidendifluorid (PVDF), Polytetrafluorethylen (PTFE), besonders bevorzugt bestehend aus oder beschichtet mit einem abrasiven Material, wie z.B. Korund, Arkansasstein oder Siliciumcarbid, so dass die Elektrodenoberfläche kontinuierlich mechanisch gereinigt wird.
Der Körper (4) wird zweckmäßigerweise durch eine Nachführvorrichtung (7), insbesondere eine Spiralfeder oder ein Gewicht, auf die rotierende Redoxelektrode gedrückt. Die Berührungsstelle zwischen dem Körper (4) und der Redoxelektrode liegt bevorzugt in der Mitte des Strömungsrohres (2) und verringert an dieser Stelle (Messstelle) den Strömungsquerschnitt. Dadurch wird das Totvolumen gering gehalten. Die Messzelle enthält weiterhin eine pH-Elektrode (6), wie z.B. eine handelsübliche Glaselektrode.

Die Messzelle ist zweckmäßigerweise so aufgebaut, dass die pH-Elektrode (6), die Referenzelektrode (5) und der stabförmige Körper (4) einschließlich Nachführvorrichtung parallel zueinander stehen und jeweils um 90° versetzt zur rotierenden Redoxelektrode und vertikal zur Strömungsrichtung angeordnet sind. Das Gehäuse (8) der Messzelle ist zweckmäßigerweise aus einem inerten Material, wie z.B. PVDF, PTFE oder Polypropylen gefertigt.

Fig. 1b zeigt die Messzelle in Blickrichtung der Strömung, und Fig. 1 c eine Draufsicht von oben.

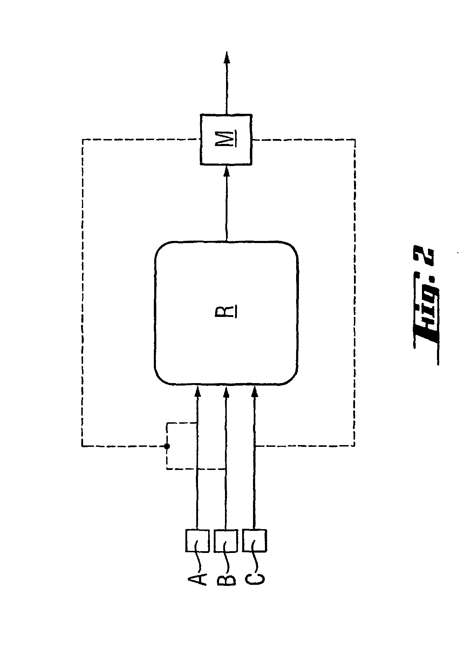

Gegenstand der Erfindung ist auch eine Vorrichtung (Fig. 2) zur Durchführung einer kontinuierlichen online geregelten Azokupplungsreaktion, gekennzeichnet durch eine mit einem kontinuierlich betriebenen Reaktor (R) und Vorratsgefäßen (A, B und gegebenenfalls C) verbundene Durchflussmesszelle (M), wie vorstehend beschrieben.
Als kontinuierlich betriebener Reaktor kommen Strömungsrohre, Rührkesselkaskaden, Mikroreaktoren oder Mikrojetreaktoren in Betracht, insbesondere solche mit Strömungsquerschnitten im Mikro- bis Millimeterbereich. Bevorzugt sind Mikroreaktoren und Mikrojetreaktoren.
Geeignete Mikroreaktoren sind beispielsweise in der DE-A-100 05 550 (PCT/EP 01/01137) oder Mikrojetreaktoren in der noch unveröffentlichten deutschen Patentanmeldung 10 049 200.2 beschrieben.

Ein Mikroreaktor besteht z.B. aus mehreren aufeinandergestapelten und miteinander verbundenen Plättchen, auf deren Oberflächen sich mikromechanisch erzeugte Strukturen befinden, die in ihrem Zusammenwirken Reaktionsräume bilden, um chemische Reaktionen auszuführen. Es ist wenigstens ein durch das System hindurchführender Kanal enthalten, der mit dem Einlass und dem Auslass verbunden ist.
Die Flussraten der Materialströme sind apparativ limitiert, beispielsweise durch die sich je nach geometrischer Auslegung des Mikroreaktors einstellenden Drücke. Es ist wünschenswert, dass die Reaktion im Mikroreaktor vollständig abläuft, es kann sich aber auch eine Verweilzone anschließen, um eine gegebenenfalls erforderliche Verweilzeit zu schaffen.
Die Flussraten betragen viskositätsabhängig zweckmäßigerweise zwischen 0,05 und 5 l/min, bevorzugt zwischen 0,05 und 500 ml/min, besonders bevorzugt zwischen 0,05 und 250 ml/min, und insbesondere zwischen 0,1 und 100 ml/min.
In Mikrojetreaktoren liegen die Flussraten im Bereich von 100 ml/min bis 2000 ml/min.

Die Redoxelektrode (1) und Referenzelektrode (5) sind dabei mit den Vorratsgefäßen A (Kupplungskomponente) und B (Diazokomponente) verbunden, die pH-Elektrode mit dem Vorratsgefäß C (Puffer, Lauge, Säure).
Die Steuerung der Volumenströme A, B, C erfolgt über übliche regelbare Fördervorrichtungen, wie z.B. Pumpen oder Ventile.

### Beispiel

### C.I. Pigment Red 2:

### Herstellung einer Diazoniumsalzlösung:

In einem 500 ml-Dreihalskolben werden 14,6 g festes 2,5-Dichloranilin in 25,1 ml Wasser vorgelegt und mit 30,8 ml einer 31 %igen Salzsäure versetzt. Nach 8-stündigem Rühren bei Raumtemperatur erhält man eine Hydrochloridlösung. Nach der Zugabe von weiteren 25,1 ml Wasser und 3,75 ml einer 60 %igen Essigsäure wird das Reaktionsgemisch auf -5°C abgekühlt. Bei dieser Temperatur werden in ca. 15 min 11,5 ml einer 40 %igen Natriumnitrit-Lösung zum Reaktionsgemisch zugetropft und für weitere 60 min bei 0°C weitergerührt. Zur Klärung des Reaktionsgemisches werden sechs Spatelspitzen ®Celite zugefügt und rasch abgesaugt. Die gelbliche Diazoniumsalzlösung wird mit Wasser auf 300 ml Gesamtvolumen (∼0,3 M) aufgefüllt.

### Herstellung einer Lösung der Kupplungskomponente:

In einem zweiten Kolben werden 23,9 g Naphtol AS in 50,2 ml Wasser vorgelegt und mit 26,7 ml einer 25 %igen Natronlauge versetzt. Dieses Gemisch wird dann bei 60°C für 120 min gerührt und in Lösung gebracht. Sie wird rasch abgesaugt und ebenfalls mit Wasser auf 300 ml Gesamtvolumen (∼0,3 M) aufgefüllt.

### Azokupplung im Mikroreaktor

Die Diazoniumsalzlösung (Eduktstrom B) und Naphtol-Lösung (Eduktstrom A) werden über kalibrierte Kolbenpumpen mit einer Flussrate von jeweils 6 ml/min die jeweiligen Edukteingänge eines Mikroreaktors (Typ ®Selecto, Cellular Process Chemistry GmbH, Frankfurt/Main), gepumpt. Die eigentliche Azokupplung findet im Reaktorraum statt. Um eine Pufferwirkung zu erzielen, werden diese Edukt-Lösungen kurz vor den Reaktoreingängen mit einer Essigsäure-Lösung (4 ml 60 %iger Essigsäure und 600 ml Wasser) verdünnt. Die Essigsäurelösung wird ebenfalls mit Hilfe von kalibrierten Kolbenpumpen über eine T-Verzweigung mit einer Flussrate von jeweils 6 ml/min in die Eduktzuleitungen des Mikroreaktors gefördert. An dem Wärmetauscher-Kreislauf des Mikroreaktors ist ein Thermostat angeschlossen, der eine Reaktionstemperatur von 40°C einstellt. Der pH-Wert der Produktsuspension beträgt am Reaktorausgang bei korrekt eingestellten Volumenströmen der Edukte 2-3.

### Regelung:

Bei konstantem Eduktzulauf und konstantem pH-Wert wird nach dem Austritt aus dem Reaktor eine Probe entnommen. Mit einem analytischen Verfahren wie DC oder HPLC wird auf einen eventuellen Überschuss einer Komponente untersucht und/oder ein Tüpfeltest mit H-Säure-Lösung (CAS-Nr. 90-20-0) zum Nachweis von Diazoniumsalzüberschuss bzw. mit Echtblausalzlösung (CAS-Nr. 20282-70-6) auf Kuppelgutüberschuss durchgeführt. Abhängig von diesem Ergebnis werden die Eduktströme Diazoniumsalzlösung und/oder Naphtol-Lösung korrigiert. Wenn kein Überschuss eines der Edukte mehr festgestellt werden kann, wird das Redoxpotential bei konstantem pH-Wert festgelegt, z.B. 187 mV bei Verwendung einer Wolframelektrode gegen Ag/AgCl. Für den weiteren Verlauf der Azokupplungsreaktion wird jede Abweichung von diesem festgelegten Redoxpotential durch entsprechende Änderung der Eduktströme A und/oder B korrigiert.
Redoxpotential: Der Potentialbereich liegt bei dieser Pigmentsynthese im Bereich von -200 bis +250 mV je nach Elektrodenmaterial.

## Patentansprüche

1. Verfahren zum Regeln der Dosierung von Reaktionskomponenten bei einer kontinuierlichen Azokupplungsreaktion, **dadurch gekennzeichnet, dass** das Redoxpotential des Reaktionsgemisches im Hauptstrom nach dessen Austritt aus einem kontinuierlich betriebenen Reaktor in einer Durchflussmesszelle mit Hilfe einer quer zur Fließrichtung des Reaktionsgemisches angeordneten rotierenden Redoxelektrode online gemessen wird, wobei eine Reinigung der Elektrode durch Kontakt mit einem stabförmigen Körper erfolgt.

2. Verfahren nach Anspruch 1, **dadurch gekennzeichnet, dass** die Dosierung der Kupplungskomponente und/oder der Diazokomponente geregelt wird.

3. Verfahren nach Anspruch 1 oder 2, **dadurch gekennzeichnet, dass** ein Eduktstrom A, enthaltend eine Lösung oder Suspension der Kupplungskomponente, ein Eduktstrom B, enthaltend eine Lösung oder Suspension der Diazokomponente, und gegebenenfalls ein Volumenstrom C, enthaltend eine Pufferlösung, eine Säure oder eine Lauge, online geregelt werden.

4. Verfahren nach mindestens einem der Ansprüche 1 bis 3, **dadurch gekennzeichnet, dass** die Dosierung der Reaktionskomponenten durch Vergleich des Messsignals der Redoxelektrode mit dem Sollwert des Redoxpotentials bei konstantem pH-Wert erfolgt.

5. Durchflussmesszelle zur Durchführung des Verfahrens nach einem oder mehreren der Ansprüche 1 bis 4, **gekennzeichnet durch** eine rotierende Redoxelektrode (1), die etwa in der Mitte des Strömungsrohres (2) der Durchflussmesszelle quer zur Strömungsrichtung des Reaktionsgemisches angeordnet und in einem Schleifkontakt (3) zur Signalabnahme drehbar gelagert ist; einen die rotierende Redoxelektrode berührenden stabförmigen Körper (4) mit einer reinigenden Wirkung; eine Referenzelektrode (5); und eine pH-Elektrode (6).

6. Durchflussmesszelle nach Anspruch 5, **dadurch gekennzeichnet, dass** die Redoxelektrode (1) aus Wolfram, Au, Pt, Ag, Sb, Mo, Cr, Graphit oder aus mindestens 80 % einer der angeführten Materialien oder aus einer Legierung untereinander besteht.

7. Durchflussmesszelle nach Anspruch 5 oder 6, **dadurch gekennzeichnet, dass** der Schleifkontakt (3) aus Kupfer ist.

8. Durchflussmesszelle nach einem oder mehreren der Ansprüche 5 bis 7, **dadurch gekennzeichnet, dass** der stabförmige Körper (4) mit Hilfe einer Nachführvorrichtung (7), vorzugsweise einer Feder, auf die rotierende Redoxelektrode gedrückt wird.

9. Durchflussmesszelle nach einem oder mehreren der Ansprüche 5 bis 8, **dadurch gekennzeichnet, dass** der stabförmige Körper (4) aus einem inerten Material, bevorzugt aus einem abrasiven Material, besteht oder mit einem inerten, bevorzugt einem abrasiven Material, beschichtet ist.

10. Durchflussmesszelle nach einem oder mehreren der Ansprüche 5 bis 9, **dadurch gekennzeichnet, dass** der stabförmige Körper (4) aus Polyvinyldifluorid, Polytetrafluorethylen, Korund, Arkansasstein oder Siliciumcarbid besteht oder damit beschichtet ist.

11. Durchflussmesszelle nach einem oder mehreren der Ansprüche 5 bis 10, **dadurch gekennzeichnet, dass** die Referenzelektrode (5) eine Ag/AgCl-Elektrode, Kalomelelektrode oder Pt/H₂-Normalwasserstoffelektrode ist.

12. Vorrichtung zur Durchführung einer kontinuierlichen, online geregelten Azokupplungsreaktion, **gekennzeichnet durch** eine mit einem kontinuierlich betriebenen Reaktor (R) und Vorratsgefäßen (A, B und ggf. C) verbundene Durchflussmesszelle (M) nach einem oder mehreren der Ansprüche 5 bis 11.

13. Vorrichtung nach Anspruch 12, **dadurch gekennzeichnet, dass** der kontinuierlich betriebene Reaktor ein Mikroreaktor oder ein Mikrojetreaktor ist.

## Claims

1. A method of regulating the metered addition of reaction components in a continuous azo coupling reaction, which comprises measuring the redox potential of a reaction mixture online in the main flow following its exit from a continuously operated reactor in a flow measurement cell with the aid of a rotating redox electrode arranged transversely to the flow direction of the reaction mixture, cleaning of the electrode taking place by contact with a rod-shaped body.

2. The method as claimed in claim 1, wherein the metered addition of the coupling component and/or of the diazo component is regulated.

3. The method as claimed in claim 1 or 2, wherein an educt stream A comprising a solution or suspension of the coupling component, an educt stream B comprising a solution or suspension of diazo component, and, where appropriate, a volume stream C comprising a buffer solution, an acid or an alkali are regulated online.

4. The method as claimed in at least one of claims 1 to 3, wherein the metered addition of the reaction components takes place by comparing the measurement signal of the redox electrode with the setpoint value of the redox potential at constant pH.

5. A flow measurement cell for implementing the method as claimed in one or more of claims 1 to 4, **characterized by** a rotating redox electrode (1) arranged approximately in the middle of the flow tube (2) of the flow measurement cell transversely to the flow direction of the reaction mixture and mounted rotatably in a sliding contact (3) for picking up the signal; a rod-shaped body (4) which contacts the rotating redox electrode and has a cleaning action; a reference electrode (5); and pH electrode (6).

6. The flow measurement cell as claimed in claim 5, wherein the redox electrode (1) is composed of tungsten, Au, Pt, Ag, Sb, Mo, Cr, graphite or of at least 80% of one of the listed materials or of an alloy thereof.

7. The flow measurement cell as claimed in claim 5 or 6, wherein the sliding contact (3) is of copper.

8. The flow measurement cell as claimed in one or more of claims 5 to 7, wherein the rod-shaped body (4) is pressed onto the rotating redox electrode with the aid of a tracker device (7), preferably a spring.

9. The flow measurement cell as claimed in one or more of claims 5 to 8, wherein the rod-shaped body (4) is composed of an inert material, preferably of an abrasive material, or is coated with an inert material, preferably with an abrasive material.

10. The flow measurement cell as claimed in one or more of claims 5 to 9, wherein the rod-shaped body (4) is composed of polyvinylidene difluoride, polytetrafluoroethylene, corundum, Arkansas stone or silicon carbide or is coated therewith.

11. The flow measurement cell as claimed in one or more of claims 5 to 10, wherein the reference electrode (5) is an Ag/AgCl electrode, calomel electrode or Pt/H₂ standard hydrogen electrode.

12. A device for implementing a continuous, online-regulated azo coupling reaction, **characterized by** a flow measurement cell (M) as claimed in one or more of claims 5 to 11 connected to a continuously operated reactor (R) and reservoir vessels (A, B, and, where appropriate, C).

13. The device as claimed in claim 12, wherein the continuously operated reactor is a microreactor or a microjet reactor.

## Revendications

1. Procédé pour réguler le dosage de composants réactifs dans une réaction de copulation azoïque en continu, **caractérisé en ce que** le potentiel redox du mélange réactionnel dans le courant principal, après sa sortie d'un réacteur fonctionnant en continu, est mesuré en ligne dans une cellule de mesure à écoulement continu à l'aide d'une électrode redox rotative disposée en travers du sens d'écoulement du mélange réactionnel, dans lequel on réalise une purification de l'électrode par contact avec un corps en forme de tige.

2. Procédé selon la revendication 1, **caractérisé en ce que** l'on régule le dosage du composant de copulation et/ou du composant diazoïque.

3. Procédé selon la revendication 1 ou 2, **caractérisé en ce que** l'on régule en ligne un courant d'éduit A, contenant une solution ou une suspension du composant de copulation, un courant d'éduit B, contenant une solution ou une suspension du composant diazoïque, et éventuellement un courant volumique C, contenant une solution tampon, un acide ou une base.

4. Procédé selon au moins l'une quelconque des revendications 1 à 3, **caractérisé en ce que** l'on réalise le dosage des composants réactifs en comparant le signal de mesure de l'électrode redox avec la valeur de consigne du potentiel redox à un pH constant.

5. Cellule de mesure à écoulement continu pour réaliser le procédé selon l'une quelconque ou plusieurs des revendications 1 à 4, **caractérisée par** une électrode redox rotative (1), qui est disposée approximativement au milieu du tube à écoulement (2) de la cellule de mesure à écoulement continu, en travers du sens d'écoulement du mélange réactionnel, et qui est logée de manière rotative dans un contact glissant (3) pour l'émission du signal ; un corps en forme de tige (4) ayant une action purificatrice, en contact avec l'électrode redox rotative ; une électrode de référence (5) ; et une électrode de mesure du pH (6).

6. Cellule de mesure à écoulement continu selon la revendication 5, **caractérisée en ce que** l'électrode redox (1) est composée de tungstène, d'Au, de Pt, d'Ag, de Sb, de Mo, de Cr, de graphite ou d'au moins 80% d'une des matières indiquées ou d'un alliage de ces matières.

7. Cellule de mesure à écoulement continu selon la revendication 5 ou 6, **caractérisée en ce que** le contact glissant (3) est fait de cuivre.

8. Cellule de mesure à écoulement continu selon l'une quelconque ou plusieurs des revendications 5 à 7, **caractérisée en ce que** le corps en forme de tige (4) est pressé contre l'électrode redox rotative à l'aide d'un dispositif de guidage (7), de préférence un ressort.

9. Cellule de mesure à écoulement continu selon l'une quelconque ou plusieurs des revendications 5 à 8, **caractérisée en ce que** le corps en forme de tige (4) est composé d'une matière inerte, de préférence d'une matière abrasive, ou qu'il est revêtu d'une matière inerte, de préférence d'une matière abrasive.

10. Cellule de mesure à écoulement continu selon l'une quelconque ou plusieurs des revendications 5 à 9, **caractérisée en ce que** le corps en forme de tige (4) est composé de poly(difluorure de vinyle), de polytétrafluoroéthylène, de corindon, de pierre d'Arkansas ou de carbure de silicium, ou qu'il est revêtu de ces matières.

11. Cellule de mesure à écoulement continu selon l'une quelconque ou plusieurs des revendications 5 à 10, **caractérisée en ce que** l'électrode de référence (5) est une électrode Ag/AgCl, une électrode au calomel ou une électrode normale à hydrogène Pt/H₂.

12. Dispositif pour réaliser une réaction de copulation azoïque en continu régulée en ligne, **caractérisé par** une cellule de mesure à écoulement continu (M) reliée à un réacteur fonctionnant en continu (R) et à des réservoirs (A, B et éventuellement C) selon l'une quelconque ou plusieurs des revendications 5 à 11.

13. Dispositif selon la revendication 12, **caractérisé en ce que** le réacteur fonctionnant en continu est un microréacteur ou un réacteur à microjet.
